# FASCICULE DE BREVET EUROPEEN

(11) **EP 3 256 343 B1**
(45) Date de publication et mention de la délivrance du brevet: **13.03.2019**
(21) Numéro de dépôt: 16701944.7
(22) Date de dépôt: 28.01.2016
(51) Int. Cl.: B60N 2/28, B60N 2/90

(54) **SIEGE AUTO POUR ENFANT PLIABLE EQUIPE D'UNE SANGLE DE TOP TETHER**
FALTBARER KINDERSITZ MIT EINEM OBEREN HALTEGURT
FOLDABLE CHILD CAR SEAT PROVIDED WITH A TOP TETHER STRAP

(30) Priorité: 09.02.2015 FR 1551024
(43) Date de publication de la demande: 20.12.2017
(73) Titulaire: Dorel France, 49309 Cholet Cedex (FR)
(72) Inventeur: RENAUDIN, François, 49300 Cholet (FR); GARNIER, Nicolas, 49230 Saint Germain Sur Moine (FR)
(74) Mandataire: Vidon Brevets & Stratégie
(86) Numéro de dépôt international: PCT/EP2016/051847
(87) Numéro de publication internationale: WO 2016/128228

(56) Documents cités:
- EP-A1- 2 502 780
- WO-A2-2011/094570
- AU-B2- 597 097
- FR-A1- 2 978 709
- FR-A3- 3 005 004

## Description

### 1. Domaine technique de l'invention

Le domaine de l'invention est celui de la puériculture, et plus particulièrement des sièges auto, destinés à être installés dans un véhicule. Plus précisément, l'invention concerne un siège auto pour enfant pliable, et notamment son installation dans un véhicule.

### 2. Arrière-plan technologique

Par le passé, plusieurs solutions ont été proposées pour réaliser des sièges auto pliables. Cependant, aucune de ces solutions n'est adaptée pour respecter les exigences de sécurité, notamment définies dans les normes européennes.

Les sièges auto pour enfant s'attachent généralement au siège d'un véhicule par l'intermédiaire de pinces de type ISOFIX, qui viennent se solidariser avec des anneaux prévus à cet effet dans le véhicule. En complément, des moyens permettant de s'opposer à une rotation du siège autour des pinces ISOFIX doivent être prévus. Il peut s'agir d'une jambe d'appui, ou d'une sangle de « top-tether » qui vient relier la partie supérieure du dossier à un troisième point d'accrochage prévu dans le véhicule comme par exemple divulgué par les documents WO 2011/094570 A2 et AU 597 097 B2.

La mise en oeuvre d'une telle sangle de « top tether » est peu aisée, dans le cas d'un siège pliable. Celui-ci doit être léger et aisément manipulable, ce qui est difficilement compatible avec la présence d'une zone d'accrochage renforcée de la sangle au niveau de la partie supérieure du dossier.

Ainsi, un premier risque identifié est la non-utilisation de la sangle de « top-tether » lors de l'installation du siège auto dans le véhicule. Le siège auto est alors libre de pivoter autour des pinces ISOFIX, ce qui représente un danger pour l'enfant en cas de choc ou de décélération brusque notamment.

Par ailleurs, un risque identifié est que la sangle de « top-tether » soit insuffisamment tendue. Le siège auto n'est alors pas correctement fixé au véhicule, ce qui peut représenter un risque important pour l'enfant, notamment en cas de choc. Ce risque est encore plus important dans le cas d'un siège pliable, car il convient de vérifier non seulement que les pinces ISOFIX et la sangle de top tether sont correctement installés, mais également que ceci est le cas lorsque le siège est déplié et apte à recevoir l'enfant.

### 3. Objectifs de l'invention

L'invention vise à pallier au moins certains de ces inconvénients

En particulier, l'invention vise à fournir un siège auto pliable compatible avec les exigences de sécurité actuelles.

L'invention vise aussi à fournir, dans au moins un mode de réalisation, un siège auto visant à empêcher une mauvaise installation (« misuse » en anglais) du siège auto dans le véhicule.

### 4. Exposé de l'invention

Ces objectifs, ainsi que d'autres qui apparaîtront par la suite, sont atteints à l'aide d'un siège auto pour enfant, comprenant une assise et un dossier pouvant prendre une position pliée, dans laquelle ladite assise est ramenée contre ledit dossier, pour former un ensemble compact, et une position dépliée, dans laquelle un enfant peut être installé dans ledit siège.

Selon l'invention, un tel siège comprend une sangle de solidarisation, dite sangle de « top tether », présentant un élément d'accrochage destiné à être solidarisé à un point d'accrochage prévu à cet effet dans un véhicule, ladite sangle de «top tether» étant liée à ladite assise.

Il n'a jamais été proposé de siège auto pliable et équipé d'une sangle de « top tether ». Selon l'invention, cette approche nouvelle est en outre exploitée pour fournir une solution efficace en termes de sécurité et de contrôle de l'installation de cette sangle. En effet, la bonne installation et/ou le contrôle de la bonne installation de cette sangle de « top tether » est assuré par le passage de l'assise de la position pliée à la position dépliée.

Selon un mode de réalisation particulier, le siège auto comprend des moyens de contrôle de la bonne installation de ladite sangle de « top tether », tenant compte de la tension de ladite sangle de « top tether » et/ou d'une longueur minimale déployée de ladite sangle, depuis ladite partie supérieure du dossier.

Ces deux aspects sont des exigences importantes, en termes de sécurité, parfois complexes à contrôler, et que les utilisateurs ont en conséquence parfois tendance à ignorer ou à négliger. Selon l'invention, le siège lui-même met en oeuvre un contrôle, en exploitant son caractère pliable.

Selon un premier aspect, lesdits moyens de contrôle ne permettent l'installation d'un enfant dans ledit siège que si ladite sangle de « top tether » présente une longueur déployée depuis ladite partie supérieure du dossier d'au moins 200 mm.

Il est en effet nécessaire, et prévu par la norme, que la sangle doive être déployée sur une telle longueur minimale. L'invention propose donc, selon un mode de réalisation, de lier le contrôle de cet aspect au dépliage de l'assise, et/ou à la possibilité de dépliage.

Selon un deuxième aspect, lesdits moyens de contrôle ne permettent l'installation d'un enfant dans ledit siège que si ladite sangle de « top tether » est tendue avec un niveau de tension supérieur à un seuil prédéterminé.

Il est également important que la sangle soit suffisamment tendu, et il n'est pas toujours aisé, pour l'utilisateur, de tendre la sangle et/ou de savoir si celle-ci est suffisamment tendue. Ici, à nouveau, selon un mode de réalisation, le contrôle de cet aspect est lié au dépliage de l'assise, et/ou à la possibilité de dépliage.

Biens sûr, les deux aspects mentionnés ci-dessus peuvent être combinés, ou mis en oeuvre indépendamment l'un de l'autre, selon les modes de réalisation.

Notamment, un siège selon l'invention peut comprendre un mécanisme de mise en tension de ladite sangle de « top tether » lié à un mécanisme de dépliage de ladite assise.

Dans ce cas, c'est le dépliage lui-même, c'est-à-dire le déplacement de l'assise, qui assure simultanément la mise en tension, sans que l'utilisateur n'ait à se préoccuper de cette opération : il suffit de déplacer l'assise pour qu'une tension suffisante soit appliquée : l'assise applique en fait une surtension, par rapport à celle appliquée par l'utilisateur lorsqu'il a fixé le crochet de la sangle.

Par exemple, le passage de la position pliée à la position dépliée actionne des moyens de mise en tension de ladite sangle de « top tether ». Lesdits moyens de mise en tension peuvent notamment mettre en oeuvre un système à cliquet.

Dans ce dernier cas, ladite assise peut assurer une fonction de levier dudit système à cliquet, lors du passage de la position pliée à la position dépliée.

Selon une autre approche, le siège auto comprend des moyens de blocage, interdisant le passage de la position pliée à la position dépliée, si ladite si ladite sangle de « top tether » n'est pas tendue avec un niveau de tension supérieur audit seuil prédéterminé.

Dans ce cas, il est nécessaire de tendre la sangle de façon suffisante, avant de pouvoir déplier le siège. On évite ainsi les cas de mauvaises utilisations (« misuses » en anglais), puisqu'il n'est pas possible de déplier l'assise, et donc d'installer un enfant, si la sangle n'est pas suffisamment tendue.

Dans ce cas, lesdits moyens de blocage peuvent par exemple comprendre une bielle mobile en rotation autour d'un arbre pivot, présentant une première extrémité dans et/ou le long de laquelle circule ladite sangle de «top tether» et une seconde extrémité formant et/ou contrôlant un élément de blocage en rotation de ladite assise, de façon à la maintenir dans sa position pliée lorsque ladite sangle de «top tether » n'est pas tendue avec un niveau de tension supérieur audit seuil prédéterminé.

Notamment, ladite seconde extrémité de la bielle peut former ou porter une butée coopérant avec une came solidaire de ladite assise.

Selon des variantes de mise en oeuvre, ledit arbre pivot est monté sur une traverse dudit dossier ou sur ladite assise.

L'invention concerne également un procédé d'installation d'un siège auto pour enfant, comprenant une assise et un dossier pouvant prendre une position pliée, dans laquelle ladite assise est ramenée contre ledit dossier, pour former un ensemble compact, et une position dépliée, dans laquelle un enfant peut être installé dans ledit siège, une sangle de solidarisation, dite sangle de « top tether », permettant la solidarisation d'une partie supérieure du dossier dudit siège avec un point d'accrochage prévu à cet effet dans un véhicule.

Selon l'invention, un tel procédé comprend notamment les étapes suivantes :
- mise en place du dossier du siège auto contre le dossier d'un siège de véhicule, ledit siège auto étant dans ladite position pliée ;
- solidarisation de l'extrémité libre de ladite sangle de top tether avec le point d'accrochage prévu à cet effet dans le véhicule ;
- contrôle de la tension et/ou de la longueur déployée de ladite sangle de top tether;
- passage dans ladite position dépliée du siège, si ledit contrôle est positif.

Ainsi, selon l'invention, c'est l'assise qui assure, ou à tout le moins participe au contrôle, la sangle étant, de manière directe ou indirecte, liée à l'assise et à son déplacement.

Selon une approche particulière, le procédé comprend une étape de mise en tension conjointe à l'étape de passage de la position pliée à la position dépliée, le déplacement de l'assise par rapport au dossier assurant la mise en tension.

Par ailleurs, le procédé peut comprendre les étapes préalables de :
- déploiement de deux pinces de solidarisation depuis une position de rangement, dans des logements prévus à cet effet dans ledit dossier ;
- solidarisation desdites pinces à des anneaux prévus à cet effet dans le véhicule, ledit siège étant dans la position pliée.

### 5. Liste des figures

D'autres buts, caractéristiques et avantages de l'invention apparaîtront à la lecture de la description suivante donnée à titre illustratif et non limitatif et qui se réfère aux figures annexées, dans lesquelles :
- la figure 1 illustre un siège auto pour enfant pliable en position pliée, dans laquelle l'assise est repliée contre le dossier ;
- la figure 2 illustre un siège auto pour enfant pliable en position dépliée, dans laquelle l'assise est dépliée de façon à permettre l'installation d'un enfant ;
- les figures 3A, 3B, 3C et 3D sont des vues en plan (figure 3A) et en perspective (figures 3B, 3C et 3D) d'un système de déverrouillage des pinces ISOFIX ;

- la figure 4 est une vue en perspective de la structure du siège auto pour enfant pliable de la figure 2 comprenant un système de sécurité selon un premier mode de réalisation ;
- la figure 5 est une vue en perspective du système de sécurité selon le premier mode de réalisation ;
- la figure 6 est une vue schématique de côté du système de sécurité selon le premier mode de réalisation, l'assise étant bloquée en rotation ;
- la figure 7 est une vue schématique de côté du système de sécurité selon le premier mode de réalisation, l'assise étant en libre en rotation ;
- la figure 8 est une vue en perspective de la structure d'un siège auto pour enfant pliable comprenant un système de sécurité selon un deuxième mode de réalisation ;
- les figures 9A, 9B et 9C représente chacune une vue partielle en coupe du système de sécurité selon le deuxième mode de réalisation, dans trois positions successives ;

### 6. Description détaillée de modes de réalisation de l'invention

### 6.1 principe général

Le principe général de l'invention repose sur un siège auto pour enfant pliable comprenant un système de sécurité contrôlant la bonne installation de la sangle de « top tether », de façon à éviter qu'un enfant puisse être installé et transporté alors que cette sangle est non ou mal installée.

Le contrôle peut notamment porter sur l'un des deux aspects suivants : une tension suffisante de la sangle, par rapport à un seuil de tension minimale prédéterminé, ou une longueur de sangle minimale (par exemple 200 mm) déployée depuis la partie supérieure du dossier. On peut également prévoir que ces deux critères de sécurité doivent être respectés.

Selon l'invention, le passage dans la position dépliée, dans laquelle l'enfant peut être installé, n'est possible que si ce contrôle est positif. Selon les modes de réalisation, différents moyens sont prévus pour effectuer ce contrôle. Dans une variante, c'est le dépliage qui assure la mise en tension et/ou le déploiement d'une longueur suffisante. Le contrôle est alors implicite, puisque le dépliage lui-même assure le respect du ou des critères de sécurité.

On note ici que le terme « position dépliée » renvoie à une position dépliée « complète », dans laquelle l'installation de l'enfant est possible (l'assise du siège reposant sur l'assise du véhicule et le dossier du siège prenant appui contre le dossier du véhicule). Des positions de dépliage « intermédiaires » sont possibles alors que le ou les critères de sécurité ne sont pas remplis, en particulier lorsque le déplacement de l'assise assure leur mise en oeuvre.

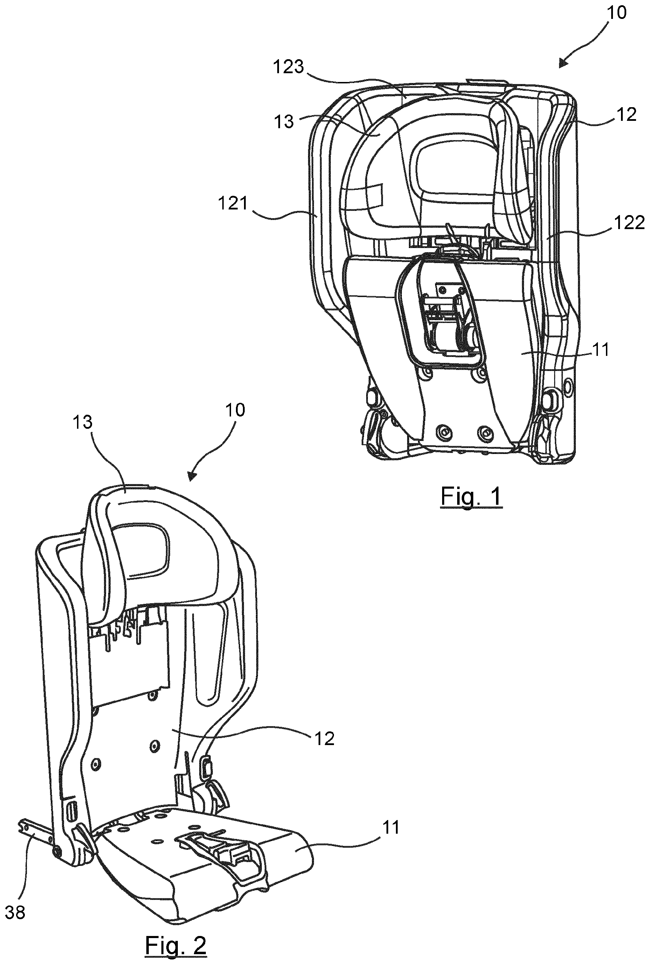

La **figure 1** présente un exemple de siège auto pour enfant pliable 10 en position pliée, dans laquelle l'assise 11 est repliée contre le dossier 12, notamment de façon à minimiser le volume du siège 10 lors de son transport. On peut également noter que cette position pliée peut faciliter la mise en place des pinces ISOFIX, l'accès aux anneaux du véhicule n'étant pas masqué par le dossier.

Le dossier 12 présente des flancs latéraux 121, 122 qui définissent, avec la partie arrière 123 du dossier un logement dans lequel s'inscrit d'une part l'assise 11, dans la position pliée, et d'autre part une têtière 13. Cette têtière peut être réglable en hauteur (voir figure 2), par exemple à l'aide d'un mécanisme à crémaillère classique. Elle est ici dimensionnée de façon que, au moins lorsqu'elle dans sa position basse, elle soit intégralement logée dans l'espace définit par les éléments du dossier. L'ensemble est ainsi particulièrement compact, en position pliée.

Bien sûr, les différentes parties (dossier, assise et têtière notamment) sont destinées à être recouverte d'une garniture de finition et/ou de protection.

L'assise 11 porte en outre un tendeur enrouleur, commentée par la suite.

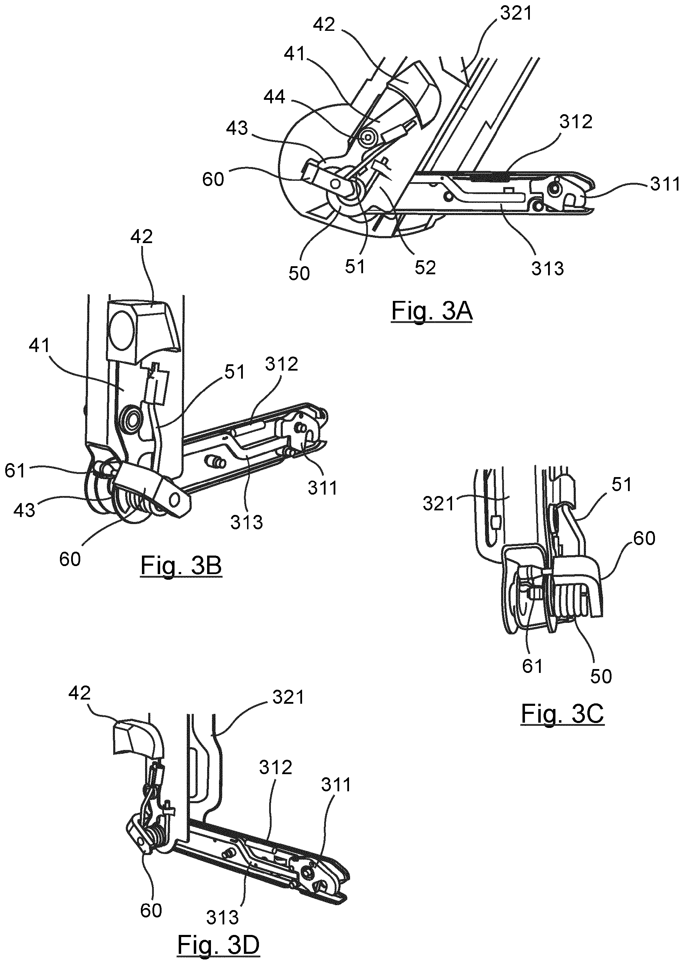

La **figure 2** présente le siège 10 en position dépliée, dans laquelle l'assise est déployée par rotation autour d'un axe de rotation 33 (figure 3) dans une position permettant l'installation d'un enfant.

Deux pinces de connexion 38, 39, par exemple de type ISOFIX permettent de solidariser le siège auto à des points d'accrochage prévus à cet effet dans la banquette du véhicule automobile.

Selon l'invention, un tel siège est donc équipé d'une sangle de « top tether » 34, qui permet de s'opposer à un déplacement en rotation du siège autour des pinces ISOFIX, en cas de forte décélération. L'invention permet un contrôle de la bonne installation de cette sangle de « top tether », à l'aide de l'assise, et en particulier de son caractère mobile par rapport au dossier.

Ce contrôle comprend au moins un des aspects suivants : le contrôle d'une longueur minimale déployée de la sangle de « top tether » et le contrôle d'une tension suffisante de celle-ci, par rapport à un seuil prédéterminé.

Selon les modes de réalisation, l'assise assure ce contrôle, le déplacement de celle-ci d'une position pliée vers une position dépliée n'étant possible que si le ou les contrôles sont positifs, ou assure au moins en partie l'opération requise de déploiement d'une longueur de sangle et/ou de tension de celle-ci, lors du passage de la position pliée à la position dépliée.

Ainsi, dans tous les cas, la sangle de « top tether » est liée à l'assise, et l'invention utilise la mobilité de celle-ci par rapport au dossier pour garantir le respect d'au moins une condition de sécurité (longueur minimale et/ou tension).

### 6.2 mode de réalisation particulier de mise en oeuvre des pinces ISOFIX

Selon un mode de réalisation, ces pinces 38, 39 sont montées en rotation autour de l'axe de rotation 33, de façon indépendante l'une de l'autre.

Ces pinces peuvent être rangées, lorsqu'elles ne sont pas utilisées, dans des emplacements (non illustrés) prévus à cet effet dans l'extrémité basse des montants 321, 322 de la structure de dossier.

Dans leur position d'utilisation, les pinces 38, 39 sont connectées aux éléments d'ancrage du véhicule, tout en restant mobiles en rotation par rapport aux montants du dossier. Ces mouvements indépendants permettent, en cas de choc, une meilleure dissipation de l'énergie, en particulier en coopération avec la forme de la structure du dossier et de l'assise.
Plus précisément, dans ce mode de réalisation, les pinces de connexion 38, 39, par exemple de type ISOFIX, permettent de solidariser le siège auto à des points d'ancrage prévus à cet effet dans la banquette du véhicule automobile. Ces pinces sont montées autour de l'axe de rotation de l'assise du siège par rapport au dossier, dans des emplacements prévus à cet effet dans l'extrémité basse des montants 321, 322 de la structure de dossier. Ces emplacements présentent un profil de U renversé et sont percés latéralement de perçages adaptés pour recevoir l'axe de rotation de l'assise et des pinces.

Les pinces 38, 39 possèdent un crochet d'ancrage 311 se connectant aux éléments d'ancrage prévus dans le véhicule, ce crochet étant mobile en rotation par rapport au corps de pince. La partie supérieure du crochet 311 est liée à un ressort 312, lui-même lié à une fourche 313 mobile en translation.

Dans leur position d'utilisation, les pinces 38, 39 sont connectées aux éléments d'ancrage du véhicule, tout en restant mobiles en rotation par rapport aux montants 321, 322 du dossier. Ceci permet la dissipation de l'énergie.

Un système de déverrouillage est prévu dans l'extrémité basse de chacun des montants 321, 322 de la structure de dossier, comme représenté sur les **figures 3A à 3D****.** Ce système comprend :
- une commande de déverrouillage comportant un bras 41 dont une première extrémité, orientée vers le haut du montant, est munie d'un bloc 42, et dont une deuxième extrémité, orientée vers le bas du montant, comporte une portion libre 43. Ce bras 41 est lié en rotation au montant 321 par une liaison pivot 44;
- un ressort 50 comportant deux tiges 51, 52, une première tige 51 étant reliée à la première extrémité du bras de la commande de déverrouillage, une deuxième tige 52 étant fixée au montant 321 de la structure de dossier ;
- un témoin de verrouillage 60, monté en pivot glissant sur l'axe du ressort dans une première de ses extrémités, et muni d'une tige 61 dans une deuxième de ses extrémités. Cette tige 61 est en liaison pivot avec la fourche 313 pilotant la rotation du crochet d'ancrage 311 de la pince 39, par l'intermédiaire du ressort 312.

Le fonctionnement du système est donc le suivant : en position d'utilisation, les pinces 38, 39 sont arrimées aux points d'ancrage du véhicule, les commandes de déverrouillage étant alignées verticalement avec les montants 321, 322, comme illustré par les **figures 3B, 3C et 3D****.** Lorsqu'un utilisateur souhaite déverrouiller les pinces 38, 39 afin de déplacer le siège auto par exemple, il agit sur le bloc 42 et abaisse ainsi le bras 41 de la commande de déverrouillage. Le bras 41, en rotation par rapport au montant 321, actionne le témoin 60 de verrouillage par l'intermédiaire de sa portion libre 43. Le témoin 60, en se déplaçant, agit à son tour sur la fourche 313, qui en translatant agit sur le ressort 312, qui fait pivoter le crochet d'ancrage 311 vers le haut. Les pinces peuvent alors être retirées des emplacements d'ancrage du véhicule.

Le bras 41 de la commande de verrouillage, en s'abaissant, exerce un effort sur la première tige 51 du ressort 50, celui-ci étant maintenu fixe par rapport au montant 321 du dossier grâce à sa deuxième tige 52. Ainsi, le bras 41 reprend naturellement sa position initiale lorsque l'utilisateur relâche la pression.

Ces pinces peuvent être redressées puis maintenues en position dans des logements prévus à l'arrière du dossier du siège. Cette caractéristique permet de limiter l'encombrement du siège lorsqu'il n'est pas utilisé, et ainsi faciliter son transport et son stockage.

Ce mode de rangement des pinces, et le fait qu'elles peuvent être déployées indépendamment l'une de l'autre, facilite l'installation, en particulier dans le cas d'une siège pliable (dont l'installation des pinces se fait alors que le siège est encore plié).

L'axe de rotation 33 assure la liaison entre l'assise et le dossier du siège et la mobilité en rotation de l'un par rapport à l'autre. Il permet notamment de déplacer en rotation l'assise 11 par rapport au dossier 12.

Il est à noter que cette solution particulière de pinces ISOFIX peut, intégralement ou partiellement, être mise en oeuvre sur d'autres types de siège auto, notamment non pliables.

### 6.3 première approche

Selon une première approche, des moyens de contrôle spécifiques sont prévus pour ne permettre le dépliage du siège uniquement lorsque le ou les critères de sécurité sont remplis. Tant que ce n'est pas le cas, l'assise ne peut être dépliée, et reste donc sensiblement parallèle au dossier (ou, à tout le moins, ne peut pas prendre la position dépliée dans laquelle un enfant peut être installé dans le siège).

Selon un mode de réalisation particulier, la sangle de top tether agit sur un élément bloqueur, mobile entre une position de blocage (position par défaut, empêchant le dépliage du siège) et une position de déblocage (autorisant le dépliage, dès que la sangle est suffisamment tendue).

### 6.4 premier exemple de mise en oeuvre

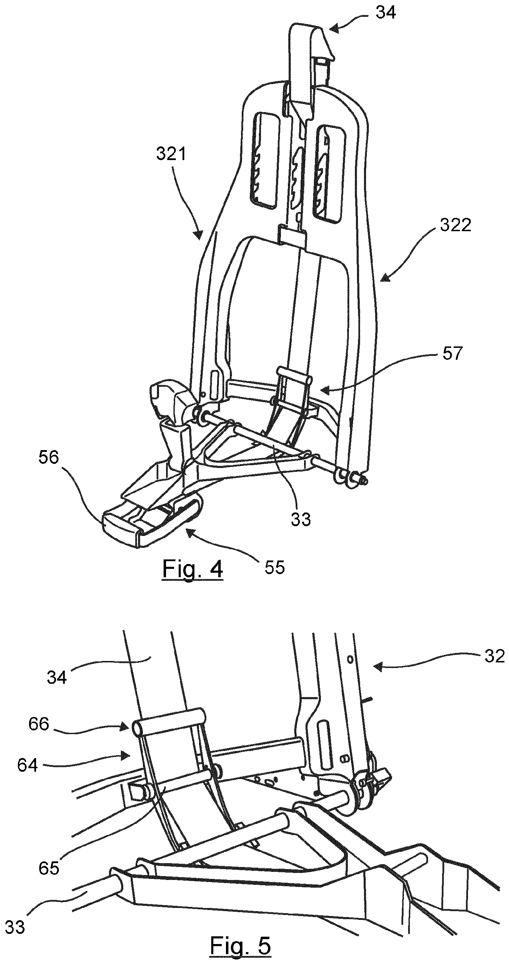

La **figure 4** présente la structure du siège 10 en position dépliée selon un premier mode de réalisation. La structure 32 du dossier 12 est reliée à la structure 31 de l'assise 11 par l'intermédiaire d'un axe de rotation 33. La sangle de « top-tether » 34, circulant dans les structures de l'assise et du dossier 31, 32, permet donc d'arrimer le siège 10 à un véhicule en fixant l'une de ses extrémités à un point d'accrochage du véhicule prévu à cet effet.

L'autre extrémité de la sangle de « top-tether » 34 vient s'engager dans un tendeur enrouleur à cliquet 55 situé au dessous de la structure de l'assise 31 et actionnable via une poignée 56 permettant la mise en tension de la sangle de « top-tether » 34. Le desserrage de la sangle de « top tether » s'effectue par une action sur un bouton de libération du ou des cliquets du tendeur enrouleur 55. Ce bouton de libération peut par exemple être placé sous l'assise.

La sangle de « top-tether » 34 circule également dans un système de sécurité 57 fixé à la structure du dossier 32.

Ce système de sécurité 57, tel qu'illustré sur la **figure 5****,** comprend une bielle 64 reliée à la structure du dossier 32 par l'intermédiaire d'un pivot 65. La sangle de « top-tether » 34 s'étend le long de la bielle 64 et entre en contact avec celle-ci au niveau d'une première extrémité 66 de la bielle 64, ainsi qu'au niveau du pivot 65. En variante, la sangle de « top-tether » peut traverser l'extrémité 66 de la bielle 64.

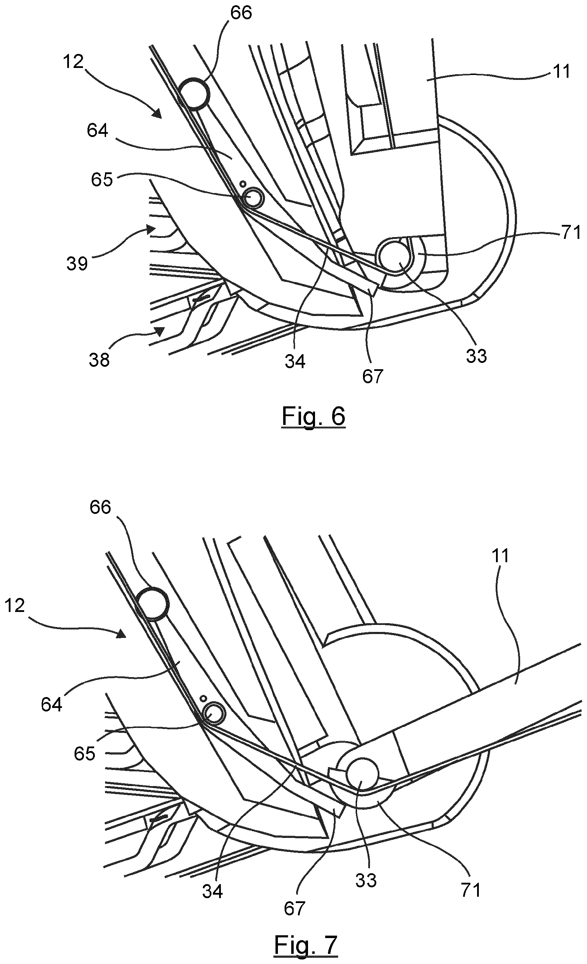

Comme illustré sur les **figures 6 et 7****,** une seconde extrémité 67 de la bielle 64 forme une butée coopérant avec une came 71, par exemple de forme semi-cylindrique, qui se situe au niveau de l'axe de rotation 33 et qui est fixée soit dans l'assise 11, soit directement sur l'axe de rotation 33.

Ainsi, le système de sécurité 57, comprenant la bielle 64 et la came 71, permet de bloquer la rotation de l'assise 11 de façon à empêcher l'installation de l'enfant tant que le niveau de tension de la sangle de « top-tether » 34 ne dépasse pas un seuil prédéterminé.

Au début de l'installation du siège 10 dans le véhicule, l'assise 11 est repliée contre le dossier 12, et la sangle de « top-tether » 34 n'est pas encore mise en tension. Le siège 10 est alors verrouillé en position pliée par l'intermédiaire de l'extrémité 67 de la bielle 64 qui vient en butée contre la came 71, et empêche ainsi la rotation de l'assise 11 autour de l'axe de rotation 33.

Cette mise en butée de l'extrémité 67 contre la came 71 peut par exemple provenir d'un déséquilibre au niveau de la liaison pivot 65 qui est principalement créé par la différence de poids et/ou de forme entre les première et seconde extrémités 66, 67 de la bielle 64. Ainsi, en l'absence de contraintes extérieures, la bielle 64 tend naturellement à pivoter vers sa position de repos dans laquelle l'extrémité 67 est en butée contre la came 71. Le cas échéant, un ressort de rappel au niveau du pivot 65 peut être prévu pour pré-contraindre la bielle 64 à adopter la position de repos, tant que la tension n'est pas suffisante.

Au cours de l'installation du siège 10 (encore pliée) dans le véhicule, la sangle de « top-tether » 34 est fixée au véhicule puis mise en tension grâce à la poignée 56 reliée au tendeur à cliquet 55. Au-delà d'un seuil prédéterminé (correspondant à une tension suffisante en terme de sécurité), le niveau de tension de la sangle de « top-tether » 34 est tel qu'elle exerce désormais une force suffisamment élevée sur la première extrémité 66 pour que la bielle 64 puisse pivoter dans le sens correspondant à la sortie de butée de la seconde extrémité 67 par rapport à la came 71. L'assise 11 est alors libre de pivoter autour de l'axe de rotation 33 vers une position dépliée puisque, comme illustré sur la **figure 7****,** la came 71 n'est désormais plus bloquée en rotation par l'extrémité 67.

Pour la désinstallation du siège 10, l'assise 11 doit être repliée contre le dossier 12 en une position pliée apte au transport du siège 10. Pour verrouiller à nouveau le siège 10 en cette position pliée, la sangle de « top-tether » 34 doit être desserrée, via le bouton agissant sur le ou les cliquets du tendeur enrouleur 55. Ce bouton est placé sous l'assise, de façon qu'il ne soit accessible que lorsque cette assise est repliée (il n'est ainsi notamment pas possible de détendre la sangle si un enfant est installé dans le siège).

Lorsque l'assise est repliée et que le niveau de tension de la sangle de « top-tether » 34 est inférieur à un seuil prédéterminé, la force exercée par la sangle 34 sur la première extrémité 66 de la bielle n'est plus suffisante pour maintenir la seconde extrémité 67 hors de sa position de butée. La bielle 64 pivote alors autour du pivot 65 pour retourner à sa position de repos dans laquelle la seconde extrémité 67 vient en butée contre la came 71, verrouillant ainsi le siège 10 en position pliée.

En variante, on peut prévoir que le bouton de déverrouillage est accessible quand l'assise partiellement redressée. L'utilisateur peut ensuite décrocher la sangle de « top tether » de son point d'accrochage au véhicule.

### 6.5 deuxième exemple de mise en oeuvre

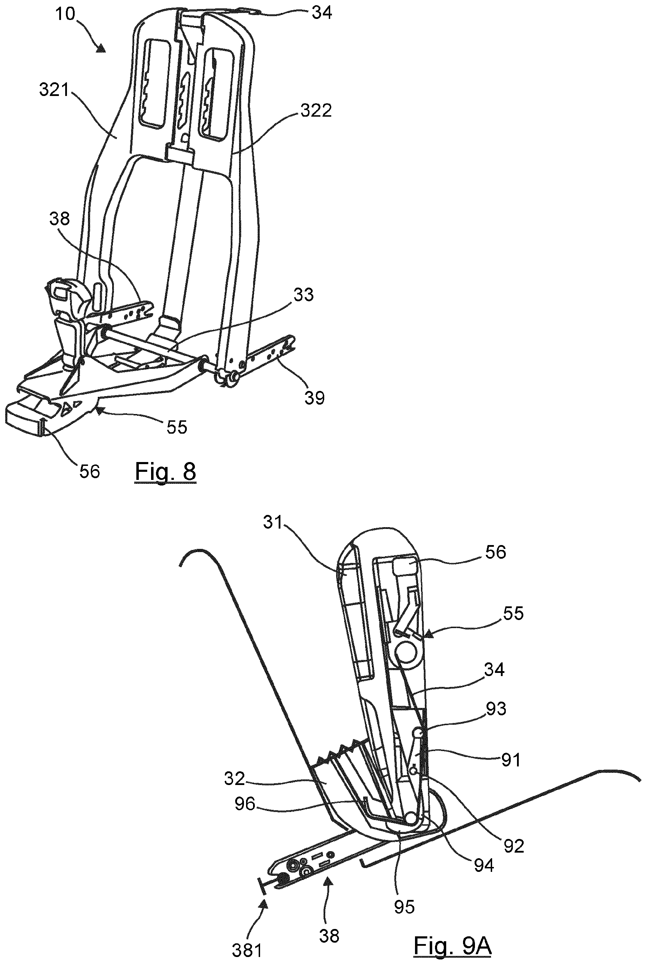

Les **figures 8** **et** **9A à 9C** présentent un deuxième mode de réalisation dans lequel le système de sécurité 90 est monté sur la structure d'assise 31 plutôt que sur la structure de dossier 32. Similairement au premier mode de réalisation décrit, la sangle de « top-tether » 34 vient longer le système de sécurité 90 qui comprend une bielle 91 montée sur la structure d'assise par l'intermédiaire d'une liaison pivot 92. Une première extrémité 93 de la bielle 91 est en contact avec la sangle de « top-tether » 34, tandis qu'une seconde extrémité 94 forme une butée coopérant avec une came 95 monté sur l'axe de rotation 33 de la structure d'assise 31.

L'installation du siège dans le véhicule se fait en plusieurs temps. On déploie tout d'abord les pinces ISOFIX 38, 39 (dans les modes de réalisation où il est prévu qu'elles peuvent être escamotées, par rotation et/ou translation, dans le dossier et/ou l'assise), pour les amener dans une position permettant leur solidarisation aux anneaux 381 prévus à cet effet dans le véhicule. On solidarise ces pinces 38, 39 à ces anneaux 381, le siège étant dans une position pliée, l'assise 11 étant placée contre le dossier 12, comme illustré sur la figure 9A (ces étapes préliminaires étant similaires à celles pouvant être mises en oeuvre dans les autres modes de réalisation).

Tant que la sangle de « top-tether » 34 ne présente pas un niveau de tension supérieur à un seuil prédéterminé, la seconde extrémité 94 de la bielle 91 est en butée contre la came 95, bloquant ainsi la rotation de la structure d'assise 31 autour de l'axe de rotation 33, comme illustré sur la figure 9A.

Cette mise en butée de l'extrémité 94 contre la came 95 peut par exemple provenir d'un déséquilibre au niveau de la liaison pivot 92 qui est principalement créé par la différence de poids et/ou de forme entre les première et seconde extrémités 93, 94 de la bielle 91. Ainsi, en l'absence de contraintes extérieures, la bielle 91 tend naturellement à pivoter vers sa position de repos dans laquelle la seconde extrémité 94 est en butée contre la came 95. Alternativement, un ressort de rappel au niveau du pivot 92 pourrait pré-contraindre la bielle 91 à adopter une position de mise en butée au niveau de sa seconde extrémité 94.

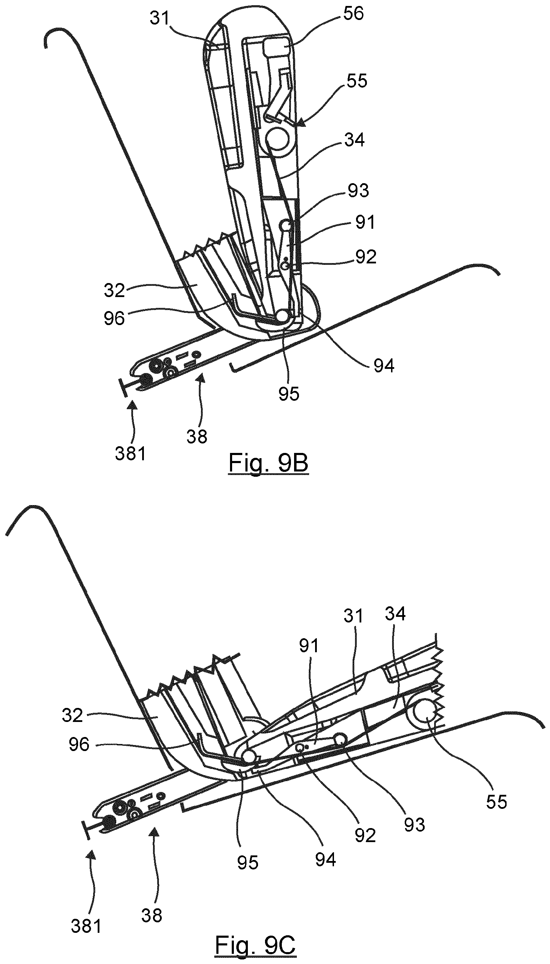

Selon un principe similaire à celui du premier mode de réalisation, la mise en tension de la sangle de « top-tether » 34 au-delà d'un seuil prédéterminé induit une force suffisante au niveau de la première extrémité 93 pour faire pivoter la bielle 91 dans le sens de sortie de butée de la seconde extrémité 94 par rapport à la came 95, comme illustré sur la figure 9B.

Pour obtenir cette tension suffisante, l'utilisateur agit sur un tendeur enrouleur à cliquet 55, après avoir bien sûr accroché à un anneau prévu à cet effet dans le véhicule l'extrémité libre de la sangle de « top tether ». Ce tendeur enrouleur à cliquet 55 peut être de tout type connu en soi et adapté à la situation.

La structure d'assise 31 peut alors pivoter librement autour de l'axe de rotation 33 de façon à adopter une position dépliée permettant l'installation de l'enfant dans le siège 10, comme illustré sur la figure 9C.

Inversement, pour la désinstallation du siège 10, l'assise 11 doit être repliée contre le dossier 12 en une position pliée apte au transport du siège 10. Pour verrouiller à nouveau le siège 10 en cette position pliée, la sangle de « top-tether » 34 doit être desserrée grâce à un bouton (non représenté) de libération du tendeur enrouleur 55. Lorsque le niveau de tension de la sangle de « top-tether » 34 se trouve être inférieur à un seuil prédéterminé, la force exercée par la sangle 34 sur la première extrémité 93 n'est plus suffisante pour maintenir la seconde extrémité 94 hors de sa position de butée. La bielle 91 pivote alors autour du pivot 92 pour retourner à sa position de repos dans laquelle la seconde extrémité 94 vient en butée contre la came 95, verrouillant ainsi le siège 10 en position pliée. Comme indiqué précédemment, cette position de repos de la bielle 91 peut être assurée par un déséquilibre ou par une force de précontrainte due par exemple à un ressort de rappel au niveau du pivot 92.

Comme illustré sur les **figures 9A à 9C****,** la sangle de « top-tether » 34 circule donc dans la structure du dossier 32 et la structure d'assise 31 tout en venant longer le système de sécurité 90. Un déflecteur 96 sert d'appui à la sangle de « top tether » 34 lors de son changement de direction entre le dossier et l'assise. Une extrémité de la sangle de « top-tether » 34 vient s'engager dans un tendeur enrouleur 55 actionnable par une poignée 56 permettant la mise en tension de la sangle de « top-tether » 34.

### 6.6 deuxième approche

En variante, l'assise 11 elle-même peut être utilisée comme levier du tendeur à cliquet. Dans ce cas, celle-ci n'est pas complètement maintenue contre le dossier, tant que la tension est insuffisante : le bloqueur est adapté pour autoriser une plage de rotation intermédiaire (sans pouvoir, bien sûr, atteindre la position complètement dépliée). Plusieurs va-et-vient de l'assise dans cette plage de rotation permettent de tendre la sangle, de façon intuitive.

### 6.7 troisième exemple de mise en oeuvre

Selon un troisième mode de réalisation, la mise en tension de la sangle de « top-tether » se fait conjointement au déploiement de l'assise vers une position dépliée.

Pour ce faire, des moyens de mise en tension tels qu'un système à cliquet sont actionnés lors du passage de l'assise de la position pliée à la position dépliée. Les opérations de mise en tension et de dépliage sont alors jointes. Un moyen de contrôle préalable de contrôle que la sangle de top-tether a été accrochée, avec une tension minimale, peut cependant être prévu, par exemple selon une des techniques classiques.

### 6.8 quatrième exemple de mise en oeuvre

Des moyens de mise en tension motorisés peuvent également être envisagés, pour assurer une tension suffisante.

### 6.9 contrôle de la longueur déployée

Un contrôle d'un déploiement minimal de la sangle de top tether peut également être prévu. Il est en effet nécessaire qu'une longueur d'au moins 200 mm soit disponible, depuis la partie supérieure du dossier.

Selon un mode de réalisation, lorsque la sangle de top tether est intégralement enroulée (le crochet se trouvant donc en contact avec le dossier, par exemple dans un logement prévu à cet effet), l'assise est maintenue dans la position pliée, contre le dossier. L'utilisateur tire alors sur la sangle, pour extraire celle-ci, et donc la dérouler de l'enrouleur. Lorsqu'une longueur minimale est extraite, ici 200 mm, l'assise est libérée. Cette détection d'une longueur suffisante peut par exemple être effectuée au niveau de l'enrouleur, en contrôlant un nombre de tours correspondant.

Ensuite, le crochet est fixé au véhicule, et la sangle est tendue, en agissant par exemple sur le levier du tendeur à cliquet, ou par le dépliage de l'assise.

## Revendications

1. Siège auto pour enfant (10), comprenant une assise (11) et un dossier (12) pouvant prendre une position pliée, dans laquelle ladite assise (11) est ramenée contre ledit dossier (12), pour former un ensemble compact, et une position dépliée, dans laquelle un enfant peut être installé dans ledit siège (10),
comprenant une sangle de solidarisation (34), dite sangle de « top tether », présentant un élément d'accrochage destiné à être solidarisé à un point d'accrochage prévu à cet effet dans un véhicule, **caractérisé en ce que** ladite sangle de « top tether » (34) est liée à ladite assise (11).

2. Siège auto selon la revendication 1, **caractérisé en ce qu'**il comprend des moyens de contrôle de la bonne installation de ladite sangle de « top tether » (34), tenant compte de la tension de ladite sangle de « top tether » (34) et/ou d'une longueur minimale déployée de ladite sangle (34), depuis ladite partie supérieure du dossier (12).

3. Siège auto selon la revendication 2, **caractérisé en ce que** lesdits moyens de contrôle ne permettent l'installation d'un enfant dans ledit siège (10) que si ladite sangle de « top tether » (34) présente une longueur déployée depuis ladite partie supérieure du dossier (12) d'au moins 200 mm.

4. Siège auto selon l'une quelconque des revendications 2 et 3, **caractérisé en ce que** lesdits moyens de contrôle ne permettent l'installation d'un enfant dans ledit siège (10) que si ladite sangle de « top tether » (34) est tendue avec un niveau de tension supérieur à un seuil prédéterminé.

5. Siège auto selon la revendication 4, **caractérisé en ce qu'**il comprend un mécanisme de mise en tension de ladite sangle de «top tether» (34) lié à un mécanisme de dépliage de ladite assise (11).

6. Siège auto selon la revendication 5, **caractérisé en ce que** le passage de la position pliée à la position dépliée actionne des moyens de mise en tension de ladite sangle de « top tether » (34).

7. Siège auto selon la revendication 6, **caractérisé en ce que** lesdits moyens de mise en tension mettent en oeuvre un système à cliquet (55, 56).

8. Siège auto selon la revendication 7, **caractérisé en ce que** ladite assise (11) assure une fonction de levier dudit système à cliquet (55, 56), lors du passage de la position pliée à la position dépliée.

9. Siège auto selon la revendication 4, **caractérisé en ce qu'**il comprend des moyens de blocage, interdisant le passage de la position pliée à la position dépliée, si ladite sangle de « top tether » (34) n'est pas tendue avec un niveau de tension supérieur audit seuil prédéterminé.

10. Siège auto selon la revendication 9, **caractérisé en ce que** lesdits moyens de blocage comprennent une bielle (64) mobile en rotation autour d'un arbre pivot (33), présentant une première extrémité (66) dans et/ou le long de laquelle circule ladite sangle de « top tether » (34) et une seconde extrémité (67) formant et/ou contrôlant un élément de blocage en rotation de ladite assise (11), de façon à la maintenir dans sa position pliée lorsque ladite sangle de « top tether » (34) n'est pas tendue avec un niveau de tension supérieur audit seuil prédéterminé.

11. Siège auto selon la revendication 10, **caractérisé en ce que** ladite seconde extrémité (67) de la bielle (64) forme ou porte une butée coopérant avec une came (71) solidaire de ladite assise (11).

12. Siège auto selon l'une quelconque des revendications 10 et 11, **caractérisé en ce que** ledit arbre pivot (33) est monté sur une traverse dudit dossier (12).

13. Siège auto selon l'une quelconque des revendications 11 et 12, **caractérisé en ce que** ledit arbre pivot (33) est monté sur ladite assise (11).

14. Procédé d'installation d'un siège auto pour enfant (10), comprenant une assise (11) et un dossier (12) pouvant prendre une position pliée, dans laquelle ladite assise (11) est ramenée contre ledit dossier (12), pour former un ensemble compact, et une position dépliée, dans laquelle un enfant peut être installée dans ledit siège (10),
une sangle de solidarisation (34), dite sangle de « top tether », permettant la solidarisation d'une partie supérieure du dossier (12) dudit siège (10) avec un point d'accrochage prévu à cet effet dans un véhicule,
**caractérisé en ce qu'**il comprend les étapes suivantes :
- mise en place du dossier (12) du siège auto (10) contre le dossier d'un siège de véhicule, ledit siège auto (10) étant dans ladite position pliée ;
- solidarisation de l'extrémité libre de ladite sangle de top tether (34) avec le point d'accrochage prévu à cet effet dans le véhicule ;
- contrôle de la tension et/ou de la longueur déployée de ladite sangle de top tether (34) ;
- passage dans ladite position dépliée du siège (10), si ledit contrôle est positif.

15. Procédé d'installation selon la revendication 14, **caractérisé en ce qu'**il comprend une étape de mise en tension conjointe à l'étape de passage de la position pliée à la position dépliée, le déplacement de l'assise (11) par rapport au dossier (12) assurant la mise en tension.

16. Procédé d'installation selon l'une quelconque des revendications 14 et 15, **caractérisé en ce qu'**il comprend les étapes préalables de :
- déploiement de deux pinces de solidarisation (38, 39) depuis une position de rangement, dans des logements prévus à cet effet dans ledit dossier (12) ;
- solidarisation desdites pinces (38, 39) à des anneaux prévus à cet effet dans le véhicule, ledit siège (10) étant dans la position pliée.

## Patentansprüche

1. Autositz für Kinder(10), der eine Sitzfläche (11) und eine Rückenlehne (12) aufweist und dazu imstande ist, eine gefaltete Stellung, in welcher die Sitzfläche (11) gegen die Rückenlehne (12) zurückgeführt ist, um eine kompakte Einheit zu bilden, und eine entfaltete Stellung einzunehmen, in welcher ein Kind in den Sitz (10) gesetzt werden kann, wobei er einen Befestigungsgurt (34) enthält, genannt "top tether"-Gurt, der ein Kopplungselement aufweist, das dazu bestimmt ist, an einer dafür vorgesehenen Kopplungsstelle in einem Fahrzeug verbunden zu werden, **dadurch gekennzeichnet, dass** der "top tether"-Gurt (34) mit der Sitzfläche (11) verbunden ist.

2. Autositz nach Anspruch 1, **dadurch gekennzeichnet, dass** er Prüfmittel zur richtigen Installation des "top tether"-Gurts (34) enthält, die die Spannung des "top tether"-Gurts (34) und/oder eine von dem Gurt (34) von dem oberen Abschnitt der Rückenlehne (12) aus bereitgestellte, minimale Länge berücksichtigen.

3. Autositz nach Anspruch 2, **dadurch gekennzeichnet, dass** die Prüfmittel ein Einsetzen eines Kindes in den Sitz (10) nur ermöglichen, wenn der "top tether"-Gurt (34) eine von dem oberen Abschnitt der Rücklehne (12) aus bereitgestellte Länge von mindestens 200 mm aufweist.

4. Autositz nach einem der Ansprüche 2 und 3, **dadurch gekennzeichnet, dass** die Prüfmittel ein Einsetzen eines Kindes in den Sitz (10) nur ermöglichen, wenn der "top tether"-Gurt (34) mit einer einen vorherbestimmten Schwellenwert übersteigenden Spannung gespannt ist.

5. Autositz nach Anspruch 4, **dadurch gekennzeichnet, dass** er einen Mechanismus zum Spannen des "top tether"-Gurts (34) enthält, der mit einem Mechanismus zum Entfalten der Sitzfläche (11) verbunden ist.

6. Autositz nach Anspruch 5, **dadurch gekennzeichnet, dass** der Übergang von der gefalteten Stellung zur entfalteten Stellung die Mittel zum Spannen des "top tether"-Gurts (34) betätigt.

7. Autositz nach Anspruch 6, **dadurch gekennzeichnet, dass** die Mittel zum Spannen ein Ratschensystem (55, 56) umsetzen.

8. Autositz nach Anspruch 7, **dadurch gekennzeichnet, dass** die Sitzfläche (11) eine Hebelfunktion des Ratschensystems (55, 56) während des Übergangs von der gefalteten Stellung in die entfaltete Stellung sicherstellt.

9. Autositz nach Anspruch 4, **dadurch gekennzeichnet, dass** er Arretiermittel enthält, die den Übergang von der gefalteten Stellung in die entfaltete Stellung verwehren, wenn der "top tether"-Gurt (34) nicht mit einer Spannung, die größer als der vorherbestimmte Schwellenwert ist, gespannt ist.

10. Autositz nach Anspruch 9, **dadurch gekennzeichnet, dass** die Arretiermittel eine um eine Drehachse (33) drehbewegliche Stange (64) aufweist, die ein erstes Ende (66), in und/oder entlang welcher sich der "top tether"-Gurt (34) bewegt, und ein zweites Ende (67) aufweist, das ein Element zur Arretierung der Rotation der Sitzfläche (11) bildet und/oder steuert, um die Sitzfläche in ihrer gefalteten Stellung zu halten, während der "top tether"-Gurt (34) nicht mit einem Spannungsniveau, die größer als der vorherbestimmte Schwellenwert ist, gespannt ist.

11. Autositz nach Anspruch 10, **dadurch gekennzeichnet, dass** das zweite Ende (67) der Pleuelstange (64) ein Widerlager, das mit einer fest verbundenen Stufenscheibe (71) der Sitzfläche (11) zusammenwirkt, bildet oder trägt.

12. Autositz nach einem der Ansprüche 10 und 11, **dadurch gekennzeichnet, dass** die Drehachse (33) an einer Querverbindung der Rückenlehne (12) befestigt ist.

13. Autositz nach einem der Ansprüche 11 und 12, **dadurch gekennzeichnet, dass** die Drehachse (33) an der Sitzfläche (11) befestigt ist.

14. Verfahren zur Installation eines Autositzes für Kinder (10), der eine Sitzfläche (11) und eine Rückenlehne (12) aufweist und dazu imstande ist, eine gefaltete Stellung, in welcher die Sitzfläche (11) gegen die Rückenlehne (12) zurückgeführt ist, um eine kompakte Einheit zu bilden, und eine entfaltete Stellung einzunehmen, in welcher ein Kind in den Sitz (10) gesetzt werden kann, wobei ein Befestigungsgurt (34), genannt "top tether"-Gurt, die Befestigung eines oberen Abschnitts der Rückenlehne (12) des Sitzes (10) mit einer dafür vorgesehenen Kopplungsstelle in einem Fahrzeug ermöglicht,
**dadurch gekennzeichnet, dass** es folgende Schritte enthält:
- Einsetzen der Rückenlehne (12) des Autositzes (10) gegen die Rückenlehne eines Fahrzeugsitzes, wobei der Autositz (10) in der gefalteten Stellung ist;
- Befestigen des freien Endes des "top tether"-Gurts (34) mit einer dafür vorgesehenen Kopplungsstelle in dem Fahrzeug;
- Prüfen der Spannung und/oder der von dem "top tether"-Gurt (34) bereitgestellten Länge;
- Übergang in die entfaltete Stellung des Sitzes (10), sofern die Prüfung positiv ist.

15. Verfahren zur Installation nach Anspruch 14, **dadurch gekennzeichnet, dass** es einen Schritt zum Spannen gemeinsam mit dem Schritt des Übergangs von der gefalteten Stellung in die entfaltete Stellung enthält, wobei das Umlegen der Sitzfläche (11) gegenüber der Rückenlehne (12) das Spannen sicherstellt.

16. Verfahren zur Installation nach einem der Ansprüche 14 und 15, **dadurch gekennzeichnet, dass** es die vorangehenden Schritte umfasst von:
- Entfalten von zwei Befestigungsklemmen (38, 39) aus einer Verstaustellung in die dafür vorgesehenen Aufnahmen in der Rückenlehne (12);
- Befestigen der Klemmen (38, 39) an dafür vorgesehenen Ringen in dem Fahrzeug, wobei der Sitz (10) in der gefalteten Stellung ist.

## Claims

1. Child car seat (10), comprising a seat bottom (11) and a seat back (12) that can have a folded position, in which said seat bottom (11) is brought back against said seat back (12), in order to form a compact unit, and an unfolded position, in which a child can be installed in said seat (10),
**characterised in that** it comprises a fastening strap (34), referred to as "top tether" strap, having an anchoring element intended to be attached to an anchoring point provided for this purpose in a vehicle, said "top tether" strap (34) being linked to said seat bottom (11).

2. Car seat according to claim 1, **characterised in that** it comprises means for controlling the correct installation of said "top tether" strap (34), taking into account the tension of said "top tether" strap (34) and/or a deployed minimum length of said strap (34), from said upper portion of the seat back (12).

3. Car seat according to claim 2, **characterised in that** said means for controlling allow for the installation of a child in said seat (10) only if said "top tether" strap (34) has a deployed length from said upper portion of the seat back (12) of at least 200 mm.

4. Car seat according to any of claims 2 and 3, **characterised in that** said means for controlling allow for the installation of a child in said seat (10) only if said "top tether" strap (34) is tightened with a level of tension greater than a predetermined threshold.

5. Car seat according to claim 4, **characterised in that** it comprises a mechanism for tensioning said "top tether" strap (34) linked to a mechanism for unfolding said seat bottom (11).

6. Car seat according to claim 5, **characterised in that** the switching from the folded position to the unfolded position actuates means for tensioning said "top tether" strap (34).

7. Car seat according to claim 6, **characterised in that** said means for tensioning implement a ratchet system (55, 56).

8. Car seat according to claim 7, **characterised in that** said seat bottom (11) provides a lever function of said ratchet system (55, 56), during the switching from the folded position to the unfolded position.

9. Car seat according to claim 4, **characterised in that** it comprises means for blocking, that prohibit the switching from the folded position to the unfolded position, if said "top tether" strap (34) is not tightened with a level of tension greater than said predetermined threshold.

10. Car seat according to claim 9, **characterised in that** said means for blocking include a connecting rod (64) mobile in rotation around a pivot shaft (33), having a first end (66) in and/or along which circulates said "top tether" strap (34) and a second end (67) forming and/or controlling an element for blocking in rotation said seat bottom (11), in such a way as to maintain it in its folded position when said "top tether" strap (34) is not tightened with a level of tension greater than said predetermined threshold.

11. Car seat according to claim 10, **characterised in that** said second end (67) of the connecting rod (64) forms or carries an abutment that cooperates with a cam (71) integral with said seat bottom (11).

12. Car seat according to any of claims 10 and 11, **characterised in that** said pivot shaft (33) is mounted on a crosspiece of said seat back (12).

13. Car seat according to any of claims 11 and 12, **characterised in that** said pivot shaft (33) is mounted on said seat bottom (11).

14. Method for installing a child car seat (10), comprising a seat bottom (11) and a seat back (12) that can have a folded position, in which said seat bottom (11) is brought back against said seat back (12), in order to form a compact unit, and an unfolded position, wherein a child can be installed in said seat (10),
a fastening strap (34), referred to as "top tether" strap, allowing for the attachment of an upper portion of the seat back (12) of said seat (10) with an anchoring point provided for this purpose in a vehicle,
**characterised in that** it comprises the following steps:
- positioning the seat back (12) of the car seat (10) against the seat back of a vehicle seat, said car seat (10) being in said folded position;
- attaching of the free end of said top tether strap (34) to the anchoring point provided for this purpose in the vehicle;
- controlling the tension and/or the deployed length of said top tether strap (34);
- switching towards said unfolded position of the seat (10), if said control is positive.

15. Method for installing according to claim 14, **characterised in that** it comprises a step of tensioning jointly with the step of switching from the folded position to the unfolded position, with the displacement of the seat bottom (11) with respect to the seat back (12) providing the tensioning.

16. Method for installing according to any of claims 14 and 15, **characterised in that** it comprises the prior steps of:
- deploying two fastening clips (38, 39) from a storage position, in housings provided for this purpose in said seat back (12);
- attaching said clips (38, 39) to rings provided for this purpose in the vehicle, said seat (10) being in the folded position.
